# EUROPÄISCHE PATENTSCHRIFT

(11) **EP 0 787 152 B1**
(45) Veröffentlichungstag und Bekanntmachung des Hinweises auf die Patenterteilung: **07.01.1998**
(21) Anmeldenummer: 96926963.8
(22) Anmeldetag: 16.08.1996
(51) Int. Cl.: C08B 1/00, D01F 13/02, D01F 2/00

(54) **VERFAHREN ZUR HERSTELLUNG EINER WÄSSRIGEN AMINOXIDLÖSUNG**
PROCESS FOR PRODUCING AN AQUEOUS AMINE OXIDE SOLUTION
PROCEDE POUR PRODUIRE UNE SOLUTION AQUEUSE D'OXYDE D'AMINE

(30) Priorität: 18.08.1995 AT 1399/95
(43) Veröffentlichungstag der Anmeldung: 06.08.1997
(73) Patentinhaber: LENZING AKTIENGESELLSCHAFT, 4860 Lenzing (AT)
(72) Erfinder: MÄNNER, Johann, A-4852 Weyregg (AT); FIRGO, Heinrich, A-4840 Vöcklabruck (AT); MANGENG, Bruno, A-4863 Seewalchen (AT); MÜLLEDER, Eduard, A-4030 Linz (AT); KALT, Wolfram, A-4860 Lenzing (AT)
(74) Vertreter: Schwarz, Albin, Dr. Kopecky & Schwarz Patentanwälte
(86) Internationale Anmeldenummer: AT9600149
(87) Internationale Veröffentlichungsnummer: WO9707137

(56) Entgegenhaltungen:
- Keine einschlägigen Dokumente gefunden

## Beschreibung

Die vorliegende Erfindung betrifft ein Verfahren zur Herstellung einer wäßrigen Aminoxidlösung, welche im Aminoxidverfahren zur Herstellung einer formbaren Celluloselösung eingesetzt wird, bei welchem Verfahren wäßrige, aminoxidhältige Lösungen, die beim Aminoxidverfahren insbesondere als Fällbäder anfallen, gereinigt und aufkonzentriert werden.

Seit einigen Jahrzehnten wird nach Verfahren zur Herstellung cellulosischer Formkörper gesucht, welche das heute in großem Maßstab angewendete Viskoseverfahren ersetzen sollen. Als eine nicht zuletzt wegen einer besseren Umweltverträglichkeit interessante Alternative hat sich dabei herauskristallisiert, Cellulose ohne Derivatisierung in einem organischen Lösungsmittel aufzulösen und aus dieser Lösung Formkörper, z.B. Fasern, Folien und anderen Formkörpern, zu extrudieren. Solcherart extrudierte Fasern erhielten von der BISFA (The International Bureau for the Standardization of man made fibers) den Gattungsnamen Lyocell. Unter einem organischen Lösungsmittel wird von der BISFA ein Gemisch aus einer organischen Chemikalie und Wasser verstanden.

Es hat sich herausgestellt, daß sich als organisches Lösungsmittel insbesondere ein Gemisch aus einem tertiären Aminoxid und Wasser sehr gut zur Herstellung von cellulosischen Formkörpern eignet. Als Aminoxid wird dabei in erster Linie N-Methylmorpholin-N-oxid (NMMO) verwendet. Andere Aminoxide sind z.B. in der EP-A - 0 553 070 beschrieben. Ein Verfahren zur Herstellung formbarer Celluloselösungen ist z.B. aus der EP-A - 0 356 419 bekannt. Die Herstellung cellulosischer Formkörper unter Anwendung tertiärer Aminoxide wird für die Zwecke der vorliegenden Beschreibung und der vorliegenden Patentansprüche allgemein als Aminoxidverfahren bezeichnet.

In der EP-A - 0 356 419 ist ein Aminoxidverfahren zur Herstellung spinnbarer Celluloselösungen beschrieben, welches als Ausgangsmaterial u.a. eine Suspension von Cellulose in flüssigem, wäßrigem N-Methylmorpholin-N-oxid (NMMO) verwendet. Dieses Verfahren besteht darin, daß die Suspension in einem Dünnschichtbehandlungsapparat einstufig und kontinuierlich in eine formbare Lösung übergeführt wird. Die formbare Lösung wird schließlich in einem Formwerkzeug, z.B einer Spinndüse, zu Filamenten versponnen, die durch ein Fällbad geführt werden.

Im Fällbad wird die Cellulose ausgefällt. Das tertiäre Aminoxid reichert sich im Fällbad an. Der Gehalt an Aminoxid im Fällbad kann dabei bis zu 30 Gew.-% betragen. Für die Wirtschaftlichkeit des Aminoxidverfahrens ist es von entscheidender Bedeutung, das Aminoxid möglichst vollständig zurückzugewinnen und neuerlich zur Herstellung einer formbaren Celluloselösung zu verwenden. Es ist somit erforderlich, aus dem Fällbad NMMO rückzugewinnen.

Mit dem Aminoxid reichern sich im Fällbad jedoch auch Abbauprodukte des Aminoxidverfahrens an. Diese Abbauprodukte können stark gefärbt sein und damit die Qualität der hergestellten cellulosischen Formkörper beeinträchtigen. Andere Stoffe wiederum können zusätzlich ein Sicherheitsrisiko darstellen, da das Aminoxid unter gewissen Bedingungen zu stark exothermen Zersetzungsreaktionen neigt und diese Zersetzungsreaktionen von bestimmten Stoffen induziert oder beschleunigt werden können. Diese Stoffe müssen vor der Konzentrierung und Abtrennung von NMMO aus dem aufzuarbeitenden Fällbad entfernt werden.

Zusätzlich zu diesen Stoffen können im Aminoxidverfahren auch Stoffe in kolloidalem Zustand auftreten. Ferner kann es zu Belagsbildungen an Wänden von Rohrleitungen und ähnlichem kommen, die zu Strömungsbehinderung und sogar zu Verstopfung der betreffenden Rohrleitungen führen können.

Nach dem Entfernen dieser unerwünschten Stoffe wird aus dem gereinigten Fällbad, welches gegebenenfalls mit anderen Prozeßwässern des Aminoxidverfahrens, wie z.B. Brüdenkondensaten, die bei der Herstellung der Celluloselösung anfallen, vereinigt wird, Wasser abgezogen. Dies kann beispielsweise durch Eindampfen geschehen. Im Sumpf dieser Eindampfung fällt hochkonzentriertes, wäßriges Aminoxid an, welches wieder in das Aminoxidverfahren rezykliert wird.

Im Stand der Technik ist keine Maßnahme bekannt, mit welcher die oben genannte Belagsbildung an Wänden von Rohrleitungen wirksam verhindert werden könnte. Die vorliegende Erfindung setzt sich zum Ziel, das Aminoxidverfahren derart zu gestalten, daß diese Belagsbildungen vermieden werden.

Das erfindungsgemäße Verfahren zur Herstellung einer wäßrigen Aminoxidlösung, welche im Aminoxidverfahren zur Herstellung einer formbaren Celluloselösung eingesetzt wird, bei welchem Verfahren wäßrige, aminoxidhältige Lösungen, die beim Aminoxidverfahren insbesondere als Fällbäder anfallen, gereinigt und aufkonzentriert werden, ist dadurch gekennzeichnet, daß den wäßrigen, aminoxidhältigen Lösungen vor, während oder nach der Reinigung ein mikrobizides Mittel zugegeben wird.

Die Erfindung beruht auf der Erkenntnis, daß die Belagsbildung von Mikroorganismen verursacht wird und im wesentlichen aus biologischen Stoffen besteht. Als Mikroorganismen wurden insbesonders Bakterien, Hefen, Pilze und Algen festgestellt. Dies ist deshalb überraschend, da tertiäre Aminoxide über Jahrzehnte ganz allgemein als mikrobizid wirkend (Stupavska, S., Acta Fac. Rer. Nat. Univ. Comen, 1980, Seiten 85ff) und als biologisch nicht abbaubar angesehen wurden. Erst seit kurzem ist bekannt, daß NMMO in einer biologischen Kläranlage abgebaut werden kann (H. Firgo, M. Eibl, W. Kalt, G. Meister: "Kritische Fragen zur Zukunft der NMMO-Technologie", Lenzinger Berichte 9/94, Seiten 81ff). Umso überraschender ist es für den Fachmann, daß Mikroorganismen in diversen NMMO-Lösungen des Aminoxidverfahrens, in denen NMMO um ein Vielfaches konzentrierter vorliegt als in einer Kläranlage, überleben können, sich sogar vermehren können und auf diese Weise die Belagsbildung verursachen.

Wird dem Aminoxidverfahren ein mikrobizides Mittel zugegeben, welches gegen diese Mikroorganismen gerichtet ist, so kann die Bildung der störenden biologischen Stoffe und somit das Entstehen von Wandbelägen wirksam verhindert werden.

Als mikrobizides Mittel werden bevorzugt Fungizide, Algizide und Bakterizide eingesetzt.

Als mikrobizide Mittel haben sich insbesondere Mittel aus der Gruppe der aliphatischen Aldehyde, aromatischen Aldehyde, Thiadiazinderivate, Tetramethylolacetylenharnstoff, Hydroxyethylphenylether, Organobromverbindungen, Polyhexamethylen-biguanid-Hydrochlorid, Natriumazid, Wasserstoffperoxid und Persessigsäure bewährt, wobei ortho-Phthalaldehyd oder Glutaraldehyd insbesondere bevorzugt sind.

Es ist dem Fachmann klar, daß die Art und Konzentration der mikrobiziden Mittel vom Einzelfall abhängt. Die wirksame Dosierung kann jedoch durch Versuche auf einfache Weise für den Einzelfall bestimmt werden. Es hat sich gezeigt, daß sich die wirksame Menge im allgemeinen im Bereich von etwa 10 bis 500 ppm bewegt.

Die Erfindung betrifft ferner ein Verfahren zur Herstellung cellulosischer Formkörper nach dem Aminoxidverfahren, bei welchem aus einer wäßrigen Lösung eines Aminoxids und zerkleinerter Cellulose eine Cellulosesuspension und schließlich eine formbare Lösung hergestellt wird, die geformt und in ein Fällbad übergeführt wird, wobei ein gebrauchtes Fällbad und cellulosische Formköper gebildet werden, welches gebrauchte Fällbad gereinigt und zu einer wäßrigen Lösung des Aminoxids aufgearbeitet wird, die neuerlich dem Aminoxidverfahren zugeführt wird, dadurch gekennzeichnet, daß das Verfahren zumindest teilweise in Gegenwart eines mikrobiziden Mittel durchgeführt wird.

Mit den folgenden Beispielen wird die Erfindung noch näher beschrieben.

### Beispiel 1 (Kontrolle)

Gebrauchtes Fällbad aus dem NMMO-Verfahren, enthaltend 20 Gew.-% NMMO, wurde 24 Stunden lang bei 25°C leicht geschüttelt. Anschließend wurde mit dem unten beschriebenen Test die Keimzahl/ml bestimmt.

### Bestimmung der Keimzahl/ml

Zur Bestimmung der Keimzahl/ml wurde jeweils 1 ml der Lösung in eine sterile Petrischale pipettiert und mit Agarmedium sorgfältig vermischt. Anschließend wurden die Proben 3 Tage bei 37°C inkubiert. Nach der Inkubation wurde mit freiem Auge die gesamte Oberfläche der Petrischale ausgezählt und die erhaltene Zahl auf 1 ml Probe bezogen.

Platten mit 20 bis 300 Keimen sind auswertbar. Waren mehr Keime vorhanden, wurde die Bestimmung mit entsprechender Verdünnung wiederholt.

Es wurde eine Keimzahl/ml von 2.200.000 bestimmt.

Um die Wirkung von mikrobizid wirkenden Mitteln zu bestimmen, wurde das Beispiel 1 mit den in der Tabelle angegebenen Substanzen unter Anwendung der angegebenen Konzentrationen wiederholt. Die jeweils erhaltenen Keimzahlen sind ebenfalls in der Tabelle angegeben.

**Tabelle**

| Beispiel | Substanz | Konzentration (ppm) | Keimzahl/ml |
|---|---|---|---|
| 1 | --- | --- | 2.200.000 |
| 2 | A | 1.000 | 0 |
| 3 | A | 100 | 0 |
| 4 | A | 20 | 3 |
| 5 | B | 1.000 | 0 |
| 6 | B | 100 | 3 |
| 7 | B | 20 | 164 |
| 8 | C | 1.000 | 0 |
| 9 | C | 100 | 160.000 |
| 10 | C | 20 | 790.000 |
| 11 | D | 1.000 | 1.800 |
| 12 | D | 100 | 460.000 |
| 13 | D | 20 | 1.330.000 |
| 14 | E | 1.000 | 8.200 |
| 15 | F | 1.000 | 87 |
| A = ortho-Phthalaldehyd; B = Glutaraldehyd; C = 3,5-Dimethylperhydro-1,3,5-thiadiazin-2-thion; D = Tetramethylolacetylendiharnstoff; F = 2,2-Dibromo-3-nitrilo-propionamid. | | | |

Ähnlich gute Ergebnisse konnten mit Polyhexamethylenbiguanid-Hydrochlorid und Natriumazid erhalten werden.

## Patentansprüche

1. Verfahren zur Herstellung einer wäßrigen Aminoxidlösung, welche im Aminoxidverfahren zur Herstellung einer formbaren Celluloselösung eingesetzt wird, bei welchem Verfahren wäßrige, aminoxidhältige Lösungen, die beim Aminoxidverfahren insbesondere als Fällbäder anfallen, gereinigt und aufkonzentriert werden, dadurch gekennzeichnet, daß den wäßrigen, aminoxidhältigen Lösungen vor, während oder nach der Reinigung ein mikrobizides Mittel zugegeben wird.

2. Verfahren nach Anspruch 1, dadurch gekennzeichnet, daß ein mikrobizides Mittel eingesetzt wird, das aus der Gruppe von Fungiziden, Algiziden und Bakteriziden gewählt ist.

3. Verfahren nach Anspruch 2, dadurch gekennzeichnet, daß das mikrobizide Mittel aus der Gruppe der aliphatischen Aldehyde, aromatischen Aldehyde, Thiadiazinderivate, Tetramethylolacetylenharnstoff, Hydroxyethylphenylether, Organobromverbindungen, Polyhexamethylen-biguanid-Hydrochlorid, Natriumazid, Wasserstoffperoxid und Persessigsäure gewählt ist.

4. Verfahren nach Anspruch 3, dadurch gekennzeichnet, daß als mikrobizides Mittel ortho-Phthalaldehyd oder Glutaraldehyd eingesetzt wird.

5. Verfahren zur Herstellung cellulosischer Formkörper nach dem Aminoxidverfahren, bei welchem aus einer wäßrigen Lösung eines Aminoxids und zerkleinerter Cellulose eine Cellulosesuspension und schließlich eine formbare Lösung hergestellt wird, die geformt und in ein Fällbad übergeführt wird, wobei ein gebrauchtes Fällbad und cellulosische Formköper gebildet werden, welches gebrauchte Fällbad gereinigt und zu einer wäßrigen Lösung des Aminoxids aufgearbeitet wird, die neuerlich dem Aminoxidverfahren zugeführt wird, dadurch gekennzeichnet, daß das Verfahren zumindest teilweise in Gegenwart eines mikrobiziden Mittels durchgeführt wird.

## Claims

1. Method for preparing an aqueous amine oxide solution which is used in the amine oxide process for preparing a mouldable cellulose solution, in which method aqueous amine-oxide-containing solutions which accumulate in the amine oxide process, in particular as precipitation baths, are purified and concentrated, characterized in that a microbicide is added to the aqueous amine-oxide-containing solutions before, during or after the purification.

2. Process according to Claim 1, characterized in that a microbicide is used which is chosen from the group comprising fungicides, algicides and bactericides.

3. Process according to Claim 2, characterized in that the microbicide is chosen from the group comprising the aliphatic aldehydes, aromatic aldehydes, thiadiazine derivatives, tetramethylolacetyleneurea, hydroxyethyl phenyl ether, organobromine compounds, polyhexamethylene biguanide hydrochloride, sodium azide, hydrogen peroxide and peracetic acid.

4. Process according to Claim 3, characterized in that o-phthalaldehyde or glutaraldehyde is used as microbicide.

5. Process for preparing cellulosic moulded bodies by the amine oxide process, in which there is prepared from an aqueous solution of an amine oxide and comminuted cellulose a cellulose suspension and, finally, a mouldable solution which is moulded and transferred to a precipitation bath, in which process a spent precipitation bath and cellulosic moulded bodies are formed, which spent precipitation bath is purified and worked up to produce an aqueous solution of the amine oxide, which solution is again fed to the amine oxide process, characterized in that the process is carried out at least partly in the presence of a microbicide.

## Revendications

1. Procédé de préparation d'une solution aqueuse d'aminoxyde qui est utilisée dans le procédé à l'aminoxyde pour la préparation d'une solution de cellulose façonnable, procédé dans lequel des solutions aqueuses contenant de l'aminoxyde qui apparaissent dans le procédé à l'aminoxyde en particulier sous forme de bains de précipitation, sont purifiées et concentrées, caractérisé en ce qu'un agent microbicide est ajouté aux solutions aqueuses contenant de l'aminoxyde avant, pendant ou après la purification.

2. Procédé selon la revendication 1, caractérisé en ce que l'on utilise un agent microbicide qui est choisi dans le groupe des fongicides, des algicides et des bactéricides.

3. Procédé selon la revendication 2, caractérisé en ce que l'agent microbicide est choisi dans le groupe des aldéhydes aliphatiques, des aldéhydes aromatiques, des dérivés de thiadiazine, de la tétraméthylolacétylèneurée, de l'hydroxyéthylphényléther, des composés organobromés, du chlorhydrate de polyhexaméthylène-biguanide, de l'azoture de sodium, du peroxyde d'hydrogène et de l'acide peracétique.

4. Procédé selon la revendication 3, caractérisé en ce que l'on utilise l'ortho-phtalaldéhyde ou le glutaraldéhyde comme agent microbicide.

5. Procédé de préparation de corps façonnés cellulosiques selon le procédé à l'aminoxyde dans lequel on prépare à partir d'une solution aqueuse d'un aminoxyde et de cellulose broyée une suspension de cellulose et finalement une solution façonnable que l'on façonne et transfère dans un bain de précipitation, avec formation d'un bain de précipitation usé et de corps façonnés cellulosiques, lequel bain de précipitation usé est purifié et transformé en une solution aqueuse de l'aminoxyde qui est envoyée de nouveau au procédé à l'aminoxyde, caractérisé en ce que le procédé est mis en oeuvre au moins en partie en présence d'un agent microbicide.
